# EUROPÄISCHE PATENTSCHRIFT

(11) **EP 3 891 407 B1**
(45) Veröffentlichungstag und Bekanntmachung des Hinweises auf die Patenterteilung: **02.08.2023**
(21) Anmeldenummer: 19801250.2
(22) Anmeldetag: 05.11.2019
(51) Int. Cl.: F16C 11/10, B60G 7/00, F16C 11/06

(54) **KUGELGELENK**
BALL JOINT
ROTULE

(30) Priorität: 04.12.2018 DE 102018220954
(43) Veröffentlichungstag der Anmeldung: 13.10.2021
(73) Patentinhaber: ZF Friedrichshafen AG, 88046 Friedrichshafen (DE)
(72) Erfinder: HAHN, Michael, 49088 Osnabrück (DE); EULERICH, Wolfgang, 49086 Osnabrück (DE); HEIDEMANN, Manfred, 49191 Belm-Vehrte (DE)
(74) Vertreter: ZF Friedrichshafen AG
(86) Internationale Anmeldenummer: PCT/EP2019/080144
(87) Internationale Veröffentlichungsnummer: WO 2020/114694

(56) Entgegenhaltungen:
- EP-A1- 0 591 928
- WO-A1-2017/159458
- US-A- 3 999 870
- US-A1- 2003 077 114
- US-A1- 2007 274 770

## Beschreibung

Die vorliegende Erfindung betrifft ein Kugelgelenk, insbesondere ein Fahrwerksgelenk, mit einem Gehäuse und einer Kugelschale, die zur Aufnahme einer Gelenkkugel einen Kugellagerabschnitt aufweist, und einer Verdrehsicherung, die eine Bewegung der Kugelschale innerhalb des Gehäuses blockiert, wobei das Gehäuse und die Kugelschale zur Ausbildung der Verdrehsicherung jeweils mindestens ein Verbindungselement besitzen, die korrespondierende Halteprofile aufweisen, so dass die Verbindungselemente im montierten Zustand eine formschlüssige Steckverbindung bilden.

Ein derartiges Kugelgelenk ist aus der EP 0 591 928 A1 bekannt. Solche Kugelgelenke werden insbesondere zur beweglichen Lagerung von Fahrwerksteilen verwendet. Um dabei die Beweglichkeit der Fahrwerksteile dauerhaft zu gewährleisten, sind die Kugelschalen verdrehsicher innerhalb des Gehäuses gelagert, um einerseits zu vermeiden, dass sie durch eine Verdrehung die Gelenköffnung zumindest teilweise verschließen, und um andererseits einem erhöhten Verschleiß vorzubeugen. Hierzu stehen nach dem Stand der Technik mehrere alternative Möglichkeiten zur Verfügung. EP 0 591 928 A1 offenbart ein Lager gemäß dem Oberbegriff des Anspruchs 1.

Es sind beispielsweise Kugelgelenke bekannt, deren Kugelschalen im Gehäuse über Koppelstangen verankert sind. Ferner sind formschlüssige Verbindungen bekannt, die seitlich an den Kugelschalen angeordnet und zumeist zylindrisch ausgebildet sind, damit sie durch Fräsverfahren eingebracht werden können. Darüber hinaus sind Rillen oder Nippel bekannt, die in Anschlussbauteilen eingebracht sind, und die die Kugelschalenoberflächen während der Montage verformen und die Klemmung innerhalb der Gehäuse erhöhen. Schließlich sind auch kleine zumeist erhabene Elemente bekannt, die eine Art Grat bilden und sich bei der Montage in die Außenkontur der Kugelschalen eindrücken.

Die bisherigen Lösungen von Verdrehsicherungen der Kugelschalen können sich unmittelbar auf die Bereiche der tragenden Lagerung und mithin die Kugellagerabschnitte der Kugelschalen auswirken. Insbesondere variierende Wandstärken in den Kugellagerabschnitten führen gelegentlich zu unterschiedlichen Wärmeausdehnungen, was nicht selten die Leistungsfähigkeit der Gelenke verringert.

Hiervon ausgehend ist es die Aufgabe der vorliegenden Erfindung, ein Kugelgelenk, insbesondere ein Fahrwerksgelenk, mit einer gesteigerten Leistungsfähigkeit vorzuschlagen. Insbesondere soll der Traganteil der Kugelschale erhöht werden und die Leistungsfähigkeit des Gelenkes soll im Wesentlichen temperaturunabhängig sein.

Diese Aufgabe wird durch das Kugelgelenk nach Anspruch 1 gelöst. Erfindungsgemäß ist vorgesehen, dass das Gehäuse und die Kugelschale zur Ausbildung der Verdrehsicherung jeweils mindestens ein Verbindungselement besitzen, die korrespondierende Halteprofile aufweisen, so dass die Verbindungselemente im montierten Zustand eine formschlüssige Steckverbindung bilden. Hierdurch ergibt sich im Wesentlichen eine Trennung der Verdrehsicherung, bzw. der die Verdrehsicherung bildenden Verbindungselemente, und dem Kugellagerabschnitt, der den Bereich der tragenden Lagerung der Gelenkkugel innerhalb des Kugelgelenkes bildet. Hierdurch kann auf zusätzliche Befestigungselemente verzichtet werden, die anderenfalls zu einer unregelmäßigen Wandstärke des Kugellagerabschnitts führen. Hierdurch wird der Traganteil der Kugelschale maximiert, der Temperatureinfluss aufgrund einer homogenen Wärmeausdehnung reduziert und Verschleißerscheinungen an der Kugelschale reduziert. Insgesamt kann hierdurch die Leistungsfähigkeit des Kugelgelenkes deutlich gesteigert werden.

Bevorzugte Ausgestaltungen der vorliegenden Erfindung werden nachfolgend und in den Unteransprüchen beschrieben.

Damit der Kugellagerabschnitt eine von den Verbindungselementen abgekoppelte und mithin unabhängige und unbeeinflusste Lagerung der Gelenkkugel erlaubt, ist nach einer ersten bevorzugten Ausführungsform der Erfindung vorgesehen, dass der Kugellagerabschnitt das Verbindungselement der Kugelschale vollständig umringt, wobei das Verbindungselement vorzugsweise um die Mittellängsachse des Kugelgelenkes angeordnet ist. Anders ausgedrückt ist vorgesehen, dass sich das Verbindungselement der Kugelschale mit Bezug auf den geometrischen Mittelpunkt des Kugelgelenkes innerhalb eines Kegelwinkels α befindet und der Kugellagerabschnitt außerhalb des Kegelwinkels α, womit das Verbindungselement und der Kugellagerabschnitt angular voneinander beabstandet sind. Vorzugsweise ist dabei das Verbindungselement koaxial zur Mittelachse (Hochachse) angeordnet, wobei die Mittellängsachse senkrecht zur Äquatorebenen der Kugelschale ausgerichtet ist und durch ihren Mittelpunkt führt. Hierdurch ergibt sich eine unmittelbare Trennung der Verdrehsicherung und des Kugellagerabschnitts, die sich hierdurch in ihren jeweiligen Funktionen nicht beeinflussen.

Damit sich in alle Richtungen eine homogene Abstützung und Lagerung der Gelenckugel innerhalb der Kugelschale ergibt, ist nach einer bevorzugten Ausführungsform der Erfindung vorgesehen, dass der Kugellagerabschnitt mit Bezug auf die Mittellängsachse des Kugelgelenkes rotationssymmetrisch ausgebildet ist, so dass der Kugellagerabschnitt schlitzfrei und nutfrei ausgestaltet ist.

Nach einer weiteren bevorzugten Ausgestaltung ist vorgesehen, dass das Verbindungselement der Kugelschale als Positivform und das Verbindungselement des Gehäuses als korrespondierende Negativform ausgebildet sind. Insbesondere ist vorgesehen, dass die Kugelschale ein zylinderförmiges Verbindungselement mit äußeren Halteprofilen besitzt, das in ein Verbindungselement des Gehäuses in Form einer korrespondierend ausgebildeten zylindrischen Ausnehmung einführbar ist, das ebenfalls Halteprofile aufweist, die an der Zylinderinnenseite der Negativform ausgebildet sind. Als korrespondierende Halteprofile der Verbindungselemente haben sich Halteprofile als bevorzugt erwiesen, die als Sechskant oder Sechsrund ausgebildet sind oder im Querschnitt eine Schlitzform, Kreuzform oder Polygonform besitzen.

Die Verbindungselemente können bei Bedarf jedoch auch invertiert ausgestaltet sein, so dass das Verbindungselement der Kugelschale als Negativform und das Verbindungselement des Gehäuses als korrespondierende Positivform ausgebildet sind. Es ist ebenfalls nach einer bevorzugten Ausführungsform bedarfsweise vorgesehen, dass das Verbindungselement von einer Zylinderform abweichend ausgestaltet ist und eine im wesentlichen kegelstumpfförmige Außenkontur besitzt, so dass das Verbindungselement eine Zentrierungsfunktion übernimmt. Das Verbindungselement des Gehäuses ist in diesem Fall entsprechend konisch ausgestaltet.

Um die Verdrehsicherung weiter von dem Kugellagerabschnitt abzukoppeln, ist vorgesehen, dass in der Außenseite der Kugelschale eine Ausnehmung ausgebildet ist, die das Verbindungselement der Kugelschale vollständig umringt und in die das Gehäuse im montierten Zustand mit einer korrespondierend ausgebildeten ringförmigen Erhebung eingreift, wobei die Ausnehmung im Querschnitt U-förmig ausgebildet ist. Die ringförmige Erhebung des Gehäuses auf der dem Kugellagerabschnitt zugewandten Seite ist als Anlagefläche ausgebildet. Hierdurch kann sich der Kugellagerabschnitt bei auftretenden Kräften, die in die Richtung der Verdrehsicherung wirken, an der Anlagefläche des Gehäuses abstützen, womit allenfalls geringe Kräfte auf die Verdrehsicherung wirken. Bei hohen Druckbelastungen im Kugelgelenk lässt die Anlagefläche des Gehäuses kaum ein Ausweichen des Kunststoffmaterials der Kugelschale zu und stützt das verformte Material ab, damit es nicht in weniger belastete Bereiche ausweichen kann und die Gelenkspannung hierdurch herabsetzt.

Darüber hinaus ergibt sich durch die ringförmige Querschnittsverjüngung ein homogenes Material im Kugellagerabschnitt mit wenig Materialfehlern, was auf das Herstellverfahren der Kugelschale zurückzuführen ist. Die erfindungsgemäßen Kugelschalen werden vorzugsweise im Spritzgießverfahren hergestellt, wobei das Kunststoffmaterial in einer geeigneten Form zuerst in dem Bereich der späteren Verdrehsicherung eingespritzt wird. Anschließend dringt das Kunststoffmaterial durch die Querschnittsverjüngung in den Bereich des Kugellagerabschnitts ein. Die Querschnittsverjüngung wirkt als eine Art Drossel, womit hinter der Querschnittsverjüngung ein Druckabfall entsteht und sich das Kunststoffmaterial entspannt, was zu einer Beruhigung des Spritzvorgangs und zu einem gleichmäßigen Auffüllen des Kugellagerabschnitts führt. Derart hergestellte Kugelschalen besitzen insbesondere im Bereich des Kugellagerabschnitts wenig Materialfehler, insbesondere keine Fließlinien oder Lunker.

Um den Traganteil der Kugelschale weiter zu erhöhen, ist vorzugsweise vorgesehen, dass der Kugellagerabschnitt von dem Verbindungselement der Kugelschale bis zu einer Gelenköffnung des Kugelgelenkes eine stetig abnehmende Wandstärke besitzt. Für den Fall, dass zwischen dem Verbindungselement und dem Kugellagerabschnitt eine ringförmige Ausnehmung angeordnet ist, ist vorzugsweise vorgesehen, dass der Kugellagerabschnitt von der ringförmigen Ausnehmung bis zu der Gelenköffnung des Kugelgelenkes eine stetig abnehmende Wandstärke besitzt.

Vor der Montage ist die Kugelschale von dem Öffnungsbereich bis zum Äquator im Wesentlichen zylindrisch oder quasizylindrisch ausgebildet ist, so dass eine Gelenckugel in die Kugelschale einführbar ist. Ferner ist ein ringförmiges Verschlusselement vorgesehen, das den zylindrischen Teil der Kugelschale im montierten Zustand derart verformt, dass die Kugelschale die Gelenkkugel formschlüssig umgreift. Hierdurch wird der Kugellagerabschnitt homogen auf die Gelenkkugel gedrückt und kann anschließend formschlüssig im Gehäuse des Kugelgelenkes gehalten werden.

Konkrete Ausgestaltungen der vorliegenden Erfindung werden nachfolgend mit Bezug auf die Figuren erläutert. Es zeigen:
- Fig. 1: Querschnittsdarstellung eines Kugelgelenkes,
- Fig. 2a, b: Querschnittsdarstellungen einer Kugelschale und
- Fig. 3a, b: perspektivische Darstellungen einer Kugelschale und eines Gehäuses.

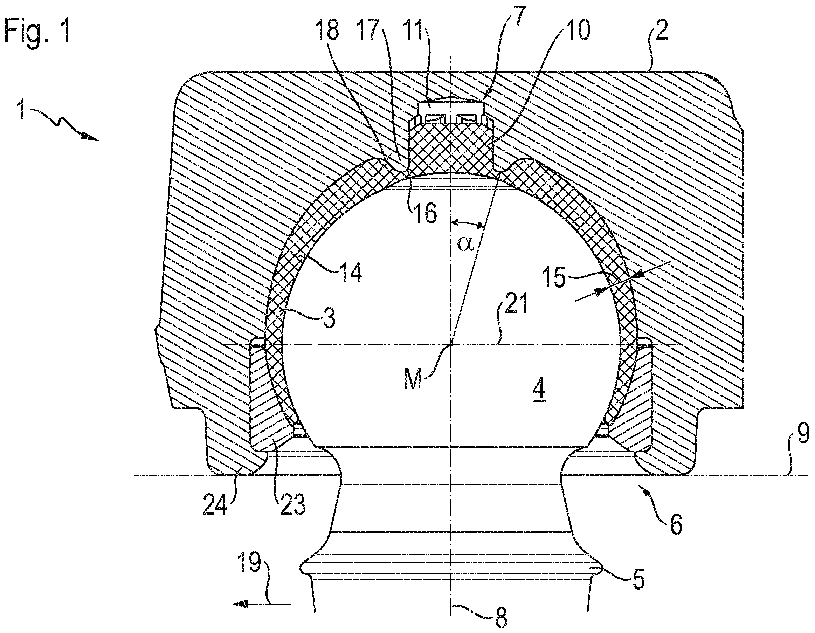

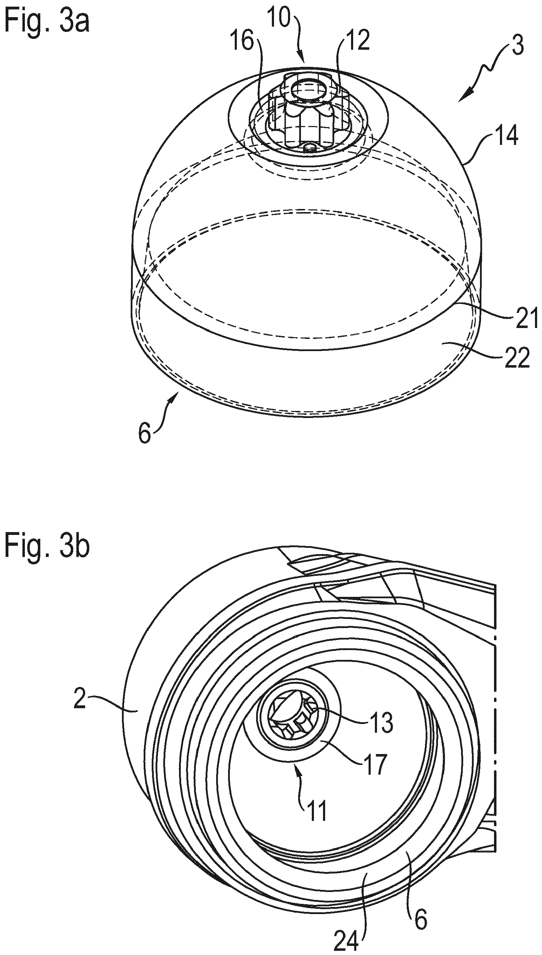

Fig. 1 zeigt eine konkrete Ausgestaltung des Kugelgelenkes 1 im montierten Zustand mit einem Gehäuse 2, einer Kugelschale 3 und einer hierin gelagerten Gelenkkugel 4, der die Kugelschale 2 mit einem Schaft 5 an einer Gelenköffnung 6 durchgreift. Die Kugelschale 3 ist über eine Verdrehsicherung 7 mit dem Gehäuse 2 verbunden, die eine Bewegung der Kugelschale 3 innerhalb des Gehäuses 2 blockiert, insbesondere eine Rotation um die Mittellängsachse 8 (Hochachse), die senkrecht zu einer Ebenen 9 der Gelenköffnung 6 oder dem Äquator 21 der Kugelschale 3 angeordnet ist und durch den Mittelpunkt M der Kugelschale 3 verläuft. Im dargestellten Ausführungsbeispiel besteht die Verdrehsicherung 7 aus einem Verbindungselement 10 auf der Kugelschale 3, das als Positivform ausgebildet ist, und einem korrespondierend ausgebildeten Verbindungselement 11 des Gehäuses 2, das als Negativform ausgestaltet ist. Beide Verbindungselemente 10, 11 sind zylindrisch ausgestaltet und besitzen an ihrer Zylinderaußen- bzw. Zylinderinnenfläche Halteprofile (in Fig. 1 nicht gezeigt). Die Ausführungsbeispiele der Figuren 3a, b zeigen in diesem Zusammenhang seitens der Kugelschale 3 ein Halteprofil 12 mit einem Außensechsrund und seitens des Gehäuses 2 ein Halteprofil 13 mit einem Innensechsrund. Im montierten Zustand blockiert ein derart ausgestaltetes Verbindungselement 10, 11 jedwede Bewegung der Kugelschale 3 innerhalb des Gehäuses 2, insbesondere eine Rotation der Kugelschale 3 um die Mittellängsachse 8 des Kugelgelenkes 1.

Das Verbindungselement 10 der Kugelschale 3 ist von einem Kugellagerabschnitt 14 umringt, so dass sich eine Trennung zwischen der Verdrehsicherung 7 bzw. dem Verbindungselement 10 und dem Kugellagerabschnitt 14 ergibt. Konkret ist mit Bezug auf den Mittelpunkt M der Kugelschale 3 vorgesehen, dass die Verdrehsicherung 7 innerhalb des Kegelwinkels α angeordnet ist, während der Kugellagerabschnitt 14 außerhalb des Kegelwinkels α angeordnet ist. Hierdurch kann der Kugellagerabschnitt 14 vollständig rotationssymmetrisch mit einer in Umfangsrichtung gesehen konstanten Wandstärke 15 ausgebildet sein, was sich positiv auf die Tragfähigkeit der Kugelschale 3 auswirkt.

Zwischen dem Kugellagerabschnitt 14 und der Verdrehsicherung 7 ist im dargestellten Ausführungsbeispiel eine Ausnehmung 16 (oder Vertiefung) ausgebildet, in die eine korrespondierend ausgebildete ringförmige Erhebung 17 des Gehäuses 2 eingreift. Die Ausnehmung 16 ist im Querschnitt im wesentlichen U-förmig ausgestaltet. Dabei ist die ringförmige Erhebung 17 des Gehäuses 2 auf der dem Kugellagerabschnitt 14 zugewandten Seite als Anlagefläche 18 ausgebildet, so dass sich der Kugellagerabschnitt 14 hieran abstützen kann. Wird der Schaft 5 beispielsweise in Pfeilrichtung 19 nach links verschwenkt, wirkt in Abhängigkeit der Reibungskräfte innerhalb des Gelenkes 1 eine Kraft auf den Kugellagerabschnitt 14 in Richtung der Verdrehsicherung 7 und der Kugellagerabschnitt 14 kann sich an der dort angeordneten Anlagefläche 18 des Gehäuses 2 abstützen.

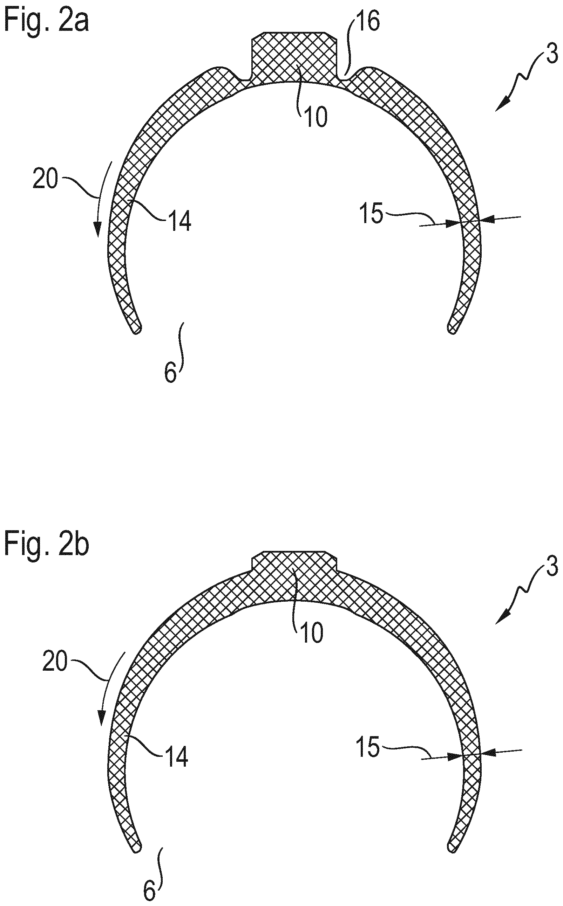

Die Fig. 2a, b zeigen jeweils Querschnittsdarstellungen der Kugelschale 3, wobei die Ausführungsform nach Fig. 2a eine Ausnehmung 16 zwischen dem Kugellagerabschnitt 14 und dem Verbindungselement 10 besitzt, während die nicht beanspruchte Ausführungsform nach Fig. 2b keine Ausnehmung zwischen dem Kugellagerabschnitt 14 und dem Verbindungselement 10 besitzt. Unabhängig hiervon ist in beiden Fällen vorgesehen, dass die Wandstärke 15 des Kugellagerabschnitts 14 von dem Verbindungselement 10 in Richtung der Gelenköffnung 6, also in Pfeilrichtung 20 stetig abnimmt.

Fig. 3a zeigt die Kugelschale 3 nach Fig. 2a in einer perspektivischen Darstellung, wobei die Kugelschale 3 im noch nicht montierten Zustand abgebildet ist. Hiernach erstreckt sich vom Äquator 21 bis zur Gelenköffnung 6 ein im Wesentlicher zylinderförmiger Abschnitt 22, der das Einführen der Gelenkkugel 4 (in Fig. 3a nicht dargestellt) in die Kugelschale 3 erlaubt. Anschließend wird die Kugelschale 3 in das Gehäuse 2 eingeführt, das in Fig. 3b perspektivisch dargestellt ist. Im montierten Zustand (s. Fig. 1) wird anschließend ein Ringelement 23 auf den zylinderförmigen Abschnitt 22 der Kugelschale 3 gedrückt, so dass sich die Kugelschale 3 an dem Gelenkkopf 4 anlegt. Das Ringelement 23 wird schließlich so weit in das Gehäuse 2 eingeführt, bis dafür vorgesehene Rastverbindungen 24 das Ringelement 23 und mithin die Kugelschale 3 innerhalb des Gehäuses 2 formschlüssig halten.

### Bezugszeichen

- 1: Kugelgelenk
- 2: Gehäuse
- 3: Kugelschale
- 4: Gelenkkugel
- 5: Schaft
- 6: Gelenköffnung
- 7: Verdrehsicherung
- 8: Mittellängsachse
- 9: Ebene
- 10: Verbindungselement auf der Kugelschale
- 11: Verbindungselement des Gehäuses
- 12: Halteprofil der Kugelschale
- 13: Halteprofil des Gehäuses
- 14: Kugellagerabschnitt
- 15: Wandstärke
- 16: Ausnehmung
- 17: Erhebung
- 18: Anlagefläche
- 19: Pfeilrichtung
- 20: Pfeilrichtung
- 21: Äquator
- 22: zylinderförmiger Abschnitt der Kugelschale
- 23: Ringelement
- 24: Rastverbindung
- α: Kegelwinkel
- M: Mittelpunkt der Kugelschale

## Patentansprüche

1. Kugelgelenk, insbesondere Fahrwerksgelenk, mit einem Gehäuse (2) und einer Kugelschale (3), die zur Aufnahme einer Gelenkkugel (4) einen Kugellagerabschnitt (14) aufweist, und einer Verdrehsicherung (7), die eine Bewegung der Kugelschale (3) innerhalb des Gehäuses (2) blockiert, wobei das Gehäuse (2) und die Kugelschale (3) zur Ausbildung der Verdrehsicherung (7) jeweils mindestens ein Verbindungselement (10, 11) besitzen, die korrespondierende Halteprofile (12, 13) aufweisen, so dass die Verbindungselemente (10, 11) im montierten Zustand eine formschlüssige Steckverbindung bilden, **dadurch gekennzeichnet, dass** in der Außenseite der Kugelschale (3) eine Ausnehmung (16) ausgebildet ist, die das Verbindungselement (10) der Kugelschale (3) vollständig umringt und in die das Gehäuse (2) im montierten Zustand mit einer korrespondierend ausgebildeten ringförmigen Erhebung (17) eingreift, wobei die Ausnehmung (16) im Querschnitt im wesentlich U-förmig ausgebildet ist, und die ringförmige Erhebung (17) des Gehäuses (2) auf der dem Kugellagerabschnitt (14) zugewandten Seite als Anlagefläche (18) ausgebildet ist, wobei sich der Kugellagerabschnitt (14) bei auftretenden Kräften, die in die Richtung der Verdrehsicherung (7) wirken, an der Anlagefläche (18) des Gehäuses (2) abstützt.

2. Kugelgelenk nach Anspruch 1, **dadurch gekennzeichnet, dass** der Kugellagerabschnitt (14) das Verbindungselement (10) der Kugelschale (3) vollständig umringt, wobei das Verbindungselement (10) vorzugsweise um die Mittellängsachse (8) des Kugelgelenkes (1) angeordnet ist.

3. Kugelgelenk nach einem der Ansprüche 1 oder 2, **dadurch gekennzeichnet, dass** sich das Verbindungselement (10) der Kugelschale (3) mit Bezug auf den geometrischen Mittelpunkt (M) des Kugelgelenkes (1) innerhalb eines Kegelwinkels α befindet und der Kugellagerabschnitt (14) außerhalb des Kegelwinkels α.

4. Kugelgelenk nach einem der Ansprüche 1 bis 3, **dadurch gekennzeichnet, dass** der Kugellagerabschnitt (14) mit Bezug auf die Mittellängsachse (8) des Kugelgelenkes (1) rotationssymmetrisch ausgebildet ist, so dass der Kugellagerabschnitt (14) schlitzfrei und nutfrei ausgestaltet ist.

5. Kugelgelenk nach einem der Ansprüche 1 bis 4, **dadurch gekennzeichnet, dass** das Verbindungselement (10) der Kugelschale (3) als Positivform und das Verbindungselement (11) des Gehäuses (2) als korrespondierende Negativform ausgebildet sind.

6. Kugelgelenk nach einem der Ansprüche 1 bis 5, **dadurch gekennzeichnet, dass** die korrespondierenden Halteprofile (12, 13) der Verbindungselemente (10, 11) als Sechskant oder Sechsrund ausgebildet sind oder im Querschnitt eine Schlitzform, Kreuzform oder Polygonform besitzen.

7. Kugelgelenk nach einem der Ansprüche 1 bis 6, **dadurch gekennzeichnet, dass** der Kugellagerabschnitt (14) von dem Verbindungselement (10) der Kugelschale (3) bis zu einer Gelenköffnung (6) des Kugelgelenkes (1) eine stetig abnehmende Wandstärke (15) besitzt.

8. Kugelgelenk nach einem der vorhergehenden Ansprüche, **dadurch gekennzeichnet, dass** der Kugellagerabschnitt (14) von der ringförmigen Ausnehmung (16) bis zu einer Gelenköffnung (6) des Kugelgelenkes (1) eine stetig abnehmende Wandstärke (15) besitzt.

## Claims

1. Ball joint, in particular chassis joint, having a housing (2) and a ball shell (3) which has a ball-bearing portion (14) for receiving a joint ball (4), and having a rotation-prevention means (7) which blocks a movement of the ball shell (3) within the housing (2), wherein, for the formation of the rotation-prevention means (7), the housing (2) and the ball shell (3) each have at least one connecting element (10, 11), which have corresponding holding profiles (12, 13), so that, in the assembled state, the connecting elements (10, 11) form a form-fitting plug connection, **characterized in that**, in the outer side of the ball shell (3), there is formed a recess (16) which completely surrounds the connecting element (10) of the ball shell (3) and into which the housing (2) engages with a correspondingly formed annular elevation (17) in the assembled state, wherein, in cross section, the recess (16) is of substantially U-shaped form, and the annular elevation (17) of the housing (2) is formed as an abutment surface (18) on the side facing towards the ball-bearing portion (14), wherein the ball-bearing portion (14) is supported against the abutment surface (18) of the housing (2) under the action of forces acting in the direction of the rotation-prevention means (7).

2. Ball joint according to Claim 1, **characterized in that** the ball-bearing portion (14) completely surrounds the connecting element (10) of the ball shell (3), wherein the connecting element (10) is preferably arranged around the central longitudinal axis (8) of the ball joint (1).

3. Ball joint according to either of Claims 1 and 2, **characterized in that**, with respect to the geometric centre (M) of the ball joint (1), the connecting element (10) of the ball shell (3) is situated inside a cone angle α and the ball-bearing portion (14) is situated outside the cone angle α.

4. Ball joint according to one of Claims 1 to 3, **characterized in that**, with respect to the central longitudinal axis (8) of the ball joint (1), the ball-bearing portion (14) is of circularly symmetrical form, so that the ball-bearing portion (14) is designed to be free of slots and grooves.

5. Ball joint according to one of Claims 1 to 4, **characterized in that** the connecting element (10) of the ball shell (3) is in the form of a positive shape and the connecting element (11) of the housing (2) is in the form of a corresponding negative shape.

6. Ball joint according to one of Claims 1 to 5, **characterized in that** the corresponding holding profiles (12, 13) of the connecting elements (10, 11) are in the form of hexagonal or hexalobular holding profiles or, in cross section, have the shape of a slot, a cross or a polygon.

7. Ball joint according to one of Claims 1 to 6, **characterized in that** the ball-bearing portion (14) has a steadily decreasing wall thickness (15) from the connecting element (10) of the ball shell (3) to a joint opening (8) of the ball joint (1).

8. Ball joint according to one of the preceding claims, **characterized in that** the ball-bearing portion (14) has a steadily decreasing wall thickness (15) from the annular recess (16) to a joint opening (8) of the ball joint (1).

## Revendications

1. Articulation à rotule, notamment articulation de châssis, avec un boîtier (2) et une coque de rotule (3) qui présente une section de roulement à billes (14) pour recevoir une rotule d'articulation (4), et une sécurité anti-rotation (7) qui bloque un mouvement de la coque de rotule (3) à l'intérieur du boîtier (2), le boîtier (2) et la coque de rotule (3) possédant chacun au moins un élément de liaison (10, 11) pour former la sécurité anti-rotation (7), lesquels présentent des profilés de retenue correspondants (12, 13), de telle sorte que les éléments de liaison (10, 11) forment à l'état monté une liaison par enfichage à complémentarité de forme, **caractérisée en ce que** qu'un évidement (16) est réalisé dans le côté extérieur de la coque de rotule (3), qui entoure entièrement l'élément de liaison (10) de la coque de rotule (3) et dans lequel le boîtier (2) s'engage à l'état monté avec une saillie annulaire (17) réalisée de manière correspondante, l'évidement (16) étant réalisé en section transversale essentiellement en forme de U, et la saillie annulaire (17) du boîtier (2) étant réalisée sous forme de surface d'appui (18) sur le côté tourné vers la section de roulement à billes (14), la section de roulement à billes (14) s'appuyant sur la surface d'appui (18) du boîtier (2) en cas d'apparition de forces agissant dans la direction de la sécurité anti-rotation (7).

2. Articulation à rotule selon la revendication 1, **caractérisée en ce que** la section de roulement à billes (14) entoure entièrement l'élément de liaison (10) de la coque de rotule (3), l'élément de liaison (10) étant de préférence agencé autour de l'axe longitudinal central (8) de l'articulation à rotule (1).

3. Articulation à rotule selon l'une quelconque des revendications 1 ou 2, **caractérisée en ce que** l'élément de liaison (10) de la coque de rotule (3) se trouve à l'intérieur d'un angle de cône α par rapport au centre géométrique (M) de l'articulation à rotule (1) et la section de roulement à billes (14) se trouve à l'extérieur de l'angle de cône α.

4. Articulation à rotule selon l'une quelconque des revendications 1 à 3, **caractérisé en ce que** la section de roulement à billes (14) est réalisée avec une symétrie de rotation par rapport à l'axe longitudinal central (8) de l'articulation à rotule (1), de telle sorte que la section de roulement à billes (14) est conçue sans fente et sans rainure.

5. Articulation à rotule selon l'une quelconque des revendications 1 à 4, **caractérisé en ce que** l'élément de liaison (10) de la coque de rotule (3) est réalisé en tant que forme positive et l'élément de liaison (11) du boîtier (2) en tant que forme négative correspondante.

6. Articulation à rotule selon l'une quelconque des revendications 1 à 5, **caractérisé en ce que** les profils de retenue correspondants (12, 13) des éléments de liaison (10, 11) sont réalisés sous forme d'hexagone ou d'hexagone rond ou possèdent en section transversale une forme de fente, une forme de croix ou une forme polygonale.

7. Articulation à rotule selon l'une quelconque des revendications 1 à 6, **caractérisé en ce que** la section de roulement à billes (14) possède une épaisseur de paroi (15) décroissante de manière continue depuis l'élément de liaison (10) de la coque de rotule (3) jusqu'à une ouverture d'articulation (6) de l'articulation à rotule (1).

8. Articulation à rotule selon l'une quelconque des revendications précédentes, **caractérisé en ce que** la section de roulement à billes (14) possède une épaisseur de paroi (15) décroissante de manière continue depuis l'évidement annulaire (16) jusqu'à une ouverture d'articulation (6) de l'articulation à rotule (1).
